# DEMANDE DE BREVET EUROPEEN

(11) **EP 0 603 042 A1**
(43) Date de publication de la demande: **22.06.1994**
(21) Numéro de dépôt: 93402995.0
(22) Date de dépôt: 13.12.1993
(51) Int. Cl.: G02B 6/42

(54) **Système optique monolithique de couplage entre une fibre optique et composant électrooptique**

(30) Priorité: 15.12.1992 FR 9215091
(71) Demandeur: FRANCE TELECOM, F-75015 Paris (FR)
(72) Inventeur: Semo, Jack, F-91120 Palaiseau (FR); Kalonji, Ndiata, F-94200 Ivry/Seine (FR)
(74) Mandataire: Martin, Jean-Jacques

(57) **Abrégé**

La présente invention concerne un système optique comprenant une fibre optique principale monomode (100) couplée à un phototransducteur (300), caractérisé par le fait qu'il comprend entre la fibre optique monomode (100) et le phototransducteur (300), un ensemble composé successivement d'un morceau de fibre multimode à gradient d'indice (400), d'un morceau de fibre multimode à saut d'indice (500) et d'une microlentille (200).

## Description

La présente invention concerne le domaine des fibres optiques destinées à être couplées avec un phototransducteur.

Dans le cadre de la présente invention, l'expression "phototransducteur" regroupe les systèmes optiques récepteurs aptes à transformer un signal optique reçu en provenant d'une fibre optique, en un signal électrique, et les systèmes optiques émetteurs aptes à générer un signal optique en direction d'une fibre optique. Ces systèmes optiques peuvent être formés de circuit intégré optique.

Plus précisément, la présente invention concerne un système optique comportant des moyens de couplage perfectionnés entre une fibre optique et un phototransducteur, aussi bien dans le sens de l'émission phototransducteur-fibre que dans celui inverse de la réception.

La présente invention concerne tout particulièrement le domaine des télécommunications. Elle s'applique par ailleurs en particulier aux fibres de type monomode à dimension de coeur réduite.

Toutefois, la présente invention n'est pas limitée à ce domaine d'utilisation, ni à ce type spécifique de fibre.

Différentes solutions et de multiples combinaisons optiques ont été élaborées jusqu'à ce jour pour réaliser le couplage entre un phototransducteur et une fibre optique.

Le document "Progress in Monomode Optical-Fiber Interconnection Devices", paru dans "Journal of Lightwave Technology, vol. LT-2, n° 3, pp 217-227, Juin 1984", analyse différentes de ces solutions.

Ces solutions connues peuvent globalement être classées en quatre catégories.

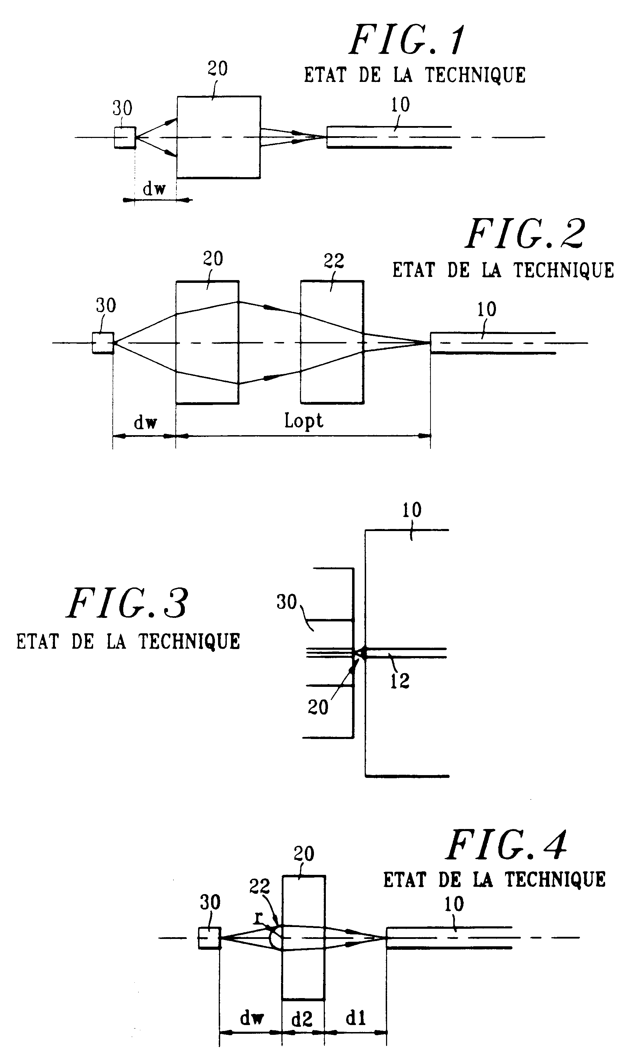

Les systèmes de la première catégorie comportent un élément optique discret simple 20, tel qu'une lentille asphérique, sphérique ou autre, intercalé entre la fibre 10 et le phototransducteur 30, comme représenté sur la figure 1. Ces systèmes permettent d'augmenter à la fois l'ouverture numérique et la distance de travail dw entre le phototransducteur 30 et l'élément couplé 20. Toutefois, ces systèmes connus sont volumineux en raison de l'utilisation d'un élément discret 20 de grande dimension. De plus, ces systèmes sont difficiles à mettre en oeuvre car ils nécessitent deux montures et deux ajustements séparés en X, Y, Z.

Les systèmes de la seconde catégorie comportent deux lentilles discrètes 20, 22, intercalées entre la fibre 10 et le phototransducteur 30, comme représenté sur la figure 2. Cette configuration, théoriquement satisfaisante, permet d'augmenter également l'ouverture numérique ainsi que la distance de travail dw. Elle demeure toutefois imparfaite par sa mise en oeuvre. En effet, cette configuration conduit à un système très volumineux : l'utilisation d'éléments optiques discrets de grande taille 20, 22, fait que la longueur Lopt, entre la face d'entrée de la première lentille et la fibre, peut facilement atteindre Smm sur un diamètre équivalent. De plus, le système est également difficile à mettre en oeuvre. Trois montures et trois ajustements séparés en X, Y, Z, sont nécessaires : deux pour les lentilles 20, 22 et un pour la fibre 10.

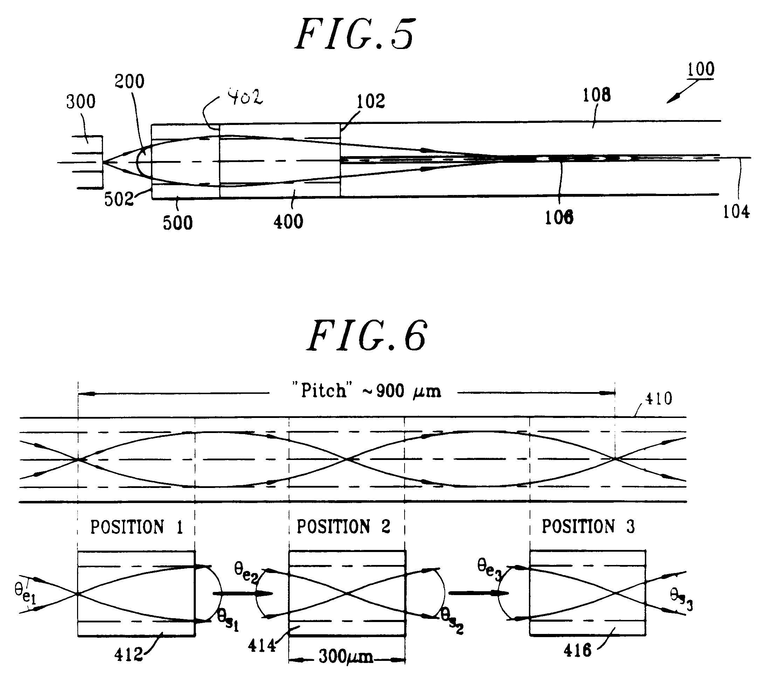

Les systèmes de la troisième catégorie comprennent une microlentille 20 placée sur l'extrémité de la fibre 10, en regard du coeur 12 de celle-ci comme représenté sur la figure 3. Ces systèmes sont le plus couramment utilisés. Ils impliquent généralement des rayons de courbures r de l'ordre de 7µm pour les microlentilles 20 et des distances de travail dw entre phototransducteur 30 (par exemple diode laser) et fibre microlentillée 10 de l'ordre de 10µm. Ces systèmes présentent cependant également différents inconvénients. Les microlentilles 20 présentent une reproductibilité de fabrication difficile (contrôle des rayons de courbures). Cette caractéristique, qui sanctionne le couplage, est essentiellement due aux faibles courbures exigées. La rétroaction sur la source émettrice 30 (diode laser) est importante, et vient donc perturber ses caractéristiques. Ce phénomène est lié aux faibles distances de travail dw imposées par ce système. Les risques sont importants pour le phototransducteur 30, en raison de la proximité de la microlentille 20. De plus le système devient dangereux pour le phototransducteur 30 dans le cas de faisceaux très divergents puisque la distance de travail dw doit encore diminuer pour pouvoir collecter toute la lumière provenant du phototransducteur. La précision requise pour l'alignement demeure très grande en raison des faibles valeurs de rayon de courbure r et de distance de travail dw.

Les systèmes de la quatrième catégorie comprennent un élément de verre 20 muni d'une lentille 22 intercalé entre la fibre 10 et le phototransducteur 30, comme représenté sur la figure 4. L'optimisation de la distance d1 entre la face de sortie de l'élément de verre 20 et la fibre 10, ainsi que de l'épaisseur d2 de l'élément de verre 20, permet de doubler les valeurs du rayon de courbure r de la lentille 22 et de la distance de travail dw entre le phototransducteur 30 et la face d'entrée de l'élément de verre 20, par rapport aux systèmes à fibre microlentillée représentés sur la figure 3. Toutefois, ces systèmes présentent également certains inconvénients. Tout d'abord, l'augmentation de rayon de courbure r pour la lentille et de la distance de travail dw demeure relativement faible. La configuration à lentille et élément de verre présente donc, à un degré moindre, les mêmes inconvénients, que celle de la fibre microlentillée représentée sur la figure 3. En outre si la distance d1 entre l'élément de verre 20 et la fibre 10, est choisie non nul, le système nécessite deux montures et deux ajustements en X, Y, Z, au lieu d'un seul.

On a par ailleurs proposé dans les documents EP-A-0 155 379 et JP-A-31 89 607, des dispositifs de couplage à base de morceaux de fibres à gradient indice. Ces systèmes ne semblent cependant pas avoir donné lieu à des applications industrielles.

En conclusion, les systèmes connus ne donnent pas totalement satisfaction.

La présente invention a pour but de perfectionner les systèmes connus de l'état de la technique en palliant leurs principaux inconvénients.

Un but de la présente invention est notamment de proposer un système qui n'entraîne pas, pour le phototransducteur, de risque de destruction par contact, ni de perturbation par rétroaction du faisceau sur l'extrémité de la fibre.

Un but auxiliaire de la présente invention est de proposer un système qui permette d'éloigner au maximum la fibre du phototransducteur.

Ces buts sont atteints selon la présente invention grâce à un système optique comprenant une fibre optique principale monomode couplée à un phototransducteur, caractérisé par le fait qu'il comprend entre la fibre optique monomode et le phototransducteur, un ensemble composé successivement d'un morceau de fibre multimode à gradient d'indice, d'un morceau de fibre multimode à saut d'indice et d'une microlentille.

Selon une autre caractéristique avantageuse de la présente invention, ladite microlentille est constituée d'une lentille multiple à rayons de courbure croissants en éloignement du phototransducteur.

Selon une autre caractéristique avantageuse de la présente invention, les différents éléments intercalés entre le phototransducteur et la fibre monomode sont fixés sur une face d'extrémité clivée de celle-ci, par épissurage.

Selon une autre caractéristique avantageuse de la présente invention, le morceau de fibre multimode à saut d'indice est conçu pour adapter le diamètre du faisceau optique au diamètre utile du morceau de fibre multimode à gradient d'indice.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1 à 4 précédemment décrites représentent schématiquement quatre solutions de couplage fibre optique/phototransducteur, conforme à l'état de la technique,
- la figure 5 représente une vue schématique en coupe axiale longitudinale d'un système conforme à la présente invention comprenant une fibre optique multimode à gradient d'indice, une fibre multimode à saut d'indice et une microlentille intercalées entre une fibre optique monomode et un phototransducteur,
- la figure 6 représente schématiquement la propagation d'une onde optique guidée dans une fibre optique multimode à gradient d'indice,
- les figures 7 à 13 représentent respectivement diverses étapes d'un procédé de fixation d'une microlentille sur une surface clivée d'une fibre optique,
- la figure 14 représente schématiquement une variante de réalisation conforme à la présente invention comprenant un ensemble de microlentilles à rayons de courbure croissants en regard d'une surface clivée d'une fibre optique, et
- la figure 15 représente le couplage obtenu avec différentes configurations de microlentilles.

On aperçoit sur la figure 5 annexée une fibre monomode 100 présentant une surface d'extrémité clivée 102, plane et perpendiculaire à son axe longitudinal 104. Sur la figure 5, le coeur de la fibre optique monomode 100 est référencé 106, tandis que sa gaine est référencée 108.

On aperçoit en outre sur la figure 5, un transducteur 300 placé en regard de la fibre optique 100, ainsi qu'un morceau 400 de fibre multimode à gradient d'indice, un morceau 500 de fibre multimode à saut d'indice et une microlentille 200 intercalés entre l'extrémité clivée 102 de la fibre optique monomode 100 et le phototransducteur 300. Le phototransducteur 300, le morceau 400 de fibre multimode à gradient d'indice, le morceau 500 de fibre multimode à saut d'indice et la microlentille 200 sont tous centrés sur l'axe longitudinal 104 de la fibre monomode 100. Plus précisément encore, le morceau 400 de fibre multimode à gradient d'indice repose contre la surface d'extrémité clivée 102 de la fibre monomode 100 et ce morceau 400 de fibre multimode à gradient d'indice supporte lui-même, le morceau 500 de fibre multimode à saut d'indice qui porte à son tour sur sa seconde extrémité, la microlentille 200.

La figure 6 annexée illustre une fibre multimode à gradient d'indice 410 et schématiquement trois tronçons 412, 414, 416 tirés de cette fibre multimode 410.

Sur la figure 6, le "pitch" représente la période de la fibre multimode à gradient d'indice qui est utilisée non pas en tant que fibre mais en tant que lentille à gradient d'indice. La valeur du "pitch" est principalement déterminée par le profil du gradient d'indice.

Plus précisément, on a représenté sur la figure 6, le mode de propagation d'une onde optique guidée dans la fibre multimode à gradient d'indice 410.

On comprend à l'examen de cette figure 6 que les caractéristiques, diamètre du coeur et forme du gradient d'un élément de fibre multimode à gradient d'indice 412, 414, 416 conditionnent la périodicité de propagation de l'onde lumineuse guidée.

Ainsi, un élément de fibre multimode à gradient d'indice 410, de longueur calibrée, permet de fournir des couples angulaires d'entrée/sortie en parfaite correspondance. En d'autres termes, à partir d'un faisceau conique incident donné, la longueur de l'élément de fibre optique multimode à gradient d'indice permet d'obtenir un faisceau conique de sortie quelconque choisi.

De ce fait, si l'on prend comme point de départ un faisceau d'entrée provenant du phototransducteur 300 et transitant par la microlentille 200, et le morceau de fibre 500, de caractéristique connue, sur l'entrée de l'élément 400 de fibre multimode à gradient d'indice, l'on peut choisir sans difficulté la longueur de cet élément 400 pour obtenir un faisceau de sortie d'ouverture déterminée compatible avec les caractéristiques de la fibre monomode 100 à coupler.

De préférence, la longueur du morceau 400 de fibre optique multimode à gradient d'indice est de l'ordre de (1/4) + (n/2) pitch avec (n = 0, 1, 2...).

Toutefois, par ailleurs, l'ouverture du faisceau d'entrée dans la fibre multimode 400 ne doit pas dépasser l'ouverture numérique de celle-ci.

Or, les cones d'émission des phototransducteurs 300, par exemple des diodes laser, peuvent atteindre 70° d'ouverture, tandis que ceux associés aux caractéristiques d'entrée des fibres monomode et multimode à gradient d'indice ont respectivement des angles au sommet de 10° et 30°. Pour obtenir, un couplage optimal du champ émis par un phototransducteur 300, avec une fibre monomode 100, il est nécessaire que le faisceau très divergent de la source 300 soit converti en faisceau convergent, en parfait accord avec le mode propre de la fibre.

Cette adaptation nécessaire à un bon couplage est obtenu grâce à la microlentille 200 placée sur la face d'extrémité clivée de l'élément 500.

Plus précisément, comme on le verra par la suite, il est prévu de préférence sur l'extrémité clivée de l'élément 500, une multilentille de courbure croissante.

Pour appliquer une microlentille 200 sur l'extrémité clivée de l'élément 500 de fibre optique multimode à saut d'indice, on procède de préférence comme suit.

Les fibres 100, 400 et 500 sont tout d'abord clivées pour obtenir une face d'extrémité 102, 402 et 502 perpendiculaire à leur axe.

L'étape de clivage des fibres optiques 100, 400 et 500, consiste à sectionner lesdites fibres de sorte que leur face d'extrémité résultante 102, 402, 502 soit au moins sensiblement plane et orthogonale à leur axe central.

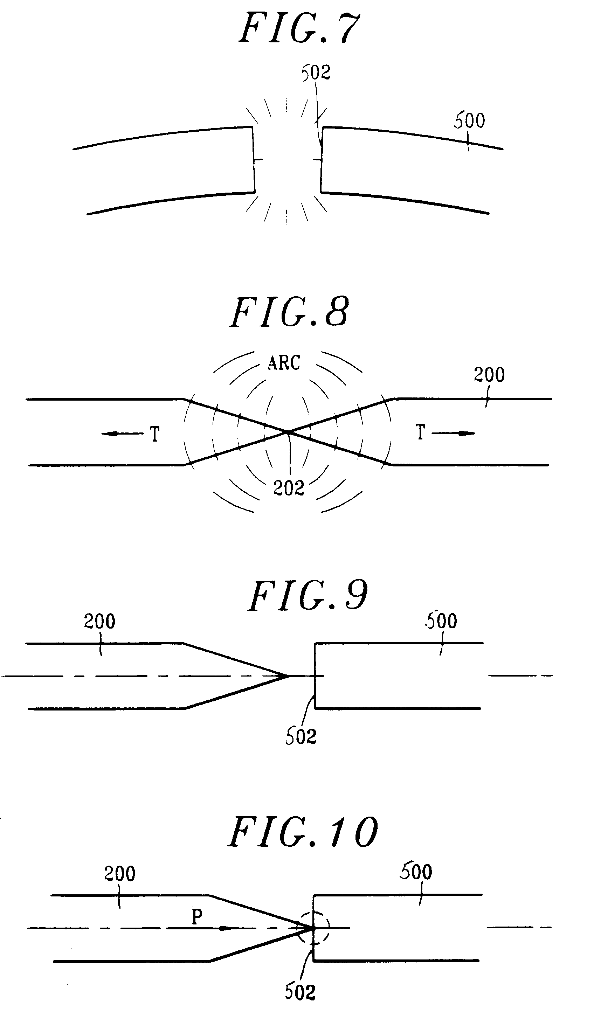

Cette étape de clivage peut être réalisée selon tout processus de sectionnement connu de l'homme de l'art, le cas échéant, par simple courbure des fibres 100, 400, 500 jusqu'à rupture brusque de celle-ci après amorce de rupture à l'aide d'un tranchant très dur, comme cela est schématisé sur la figure 7.

Pour déposer la lentille 200 sur l'extrémité clivée 502 de la fibre 500, on procède de préférence comme suit.

Comme représenté sur la figure 8, un petit morceau d'une autre fibre 200 est étiré (traction T) coaxialement et symétriquement jusqu'à la rupture en un point 202, sous l'action d'un arc électrique. Le morceau de fibre 200 peut avoir par exemple une longueur de l'ordre d'un dizaine de cm. A la fin de l'étape d'étirage, on obtient ainsi deux bouts de fibre optique 200 possédant chacun une extrémité effilée en cône.

Un bout étiré de fibre optique 200 est alors placé en regard de l'extrémité clivée 502 de la fibre 500 et aligné sur celle-ci, comme représenté sur la figure 9. Cet alignement peut être opéré par tout moyen approprié, par exemple en plaçant la fibre 500 clivée et le bout de fibre étirée 200, sur des supports en V appropriés. Les techniques connues d'épissurage de fibres optiques utilisent couramment de tels supports en V en saphir, présentant une précision de l'ordre du µm. Pour cette raison, ces supports en V ne sont pas représentés sur les figures annexées et ne seront pas décrits plus en détail par la suite.

La pointe de la fibre étirée 200 est ensuite mise en contact mécanique avec la face clivée 502 de la fibre 500, et ce sous une légère pression axial P, comme représenté sur la figure 10, tout en conservant l'alignement antérieur entre la fibre étirée 200 et la fibre clivée 500.

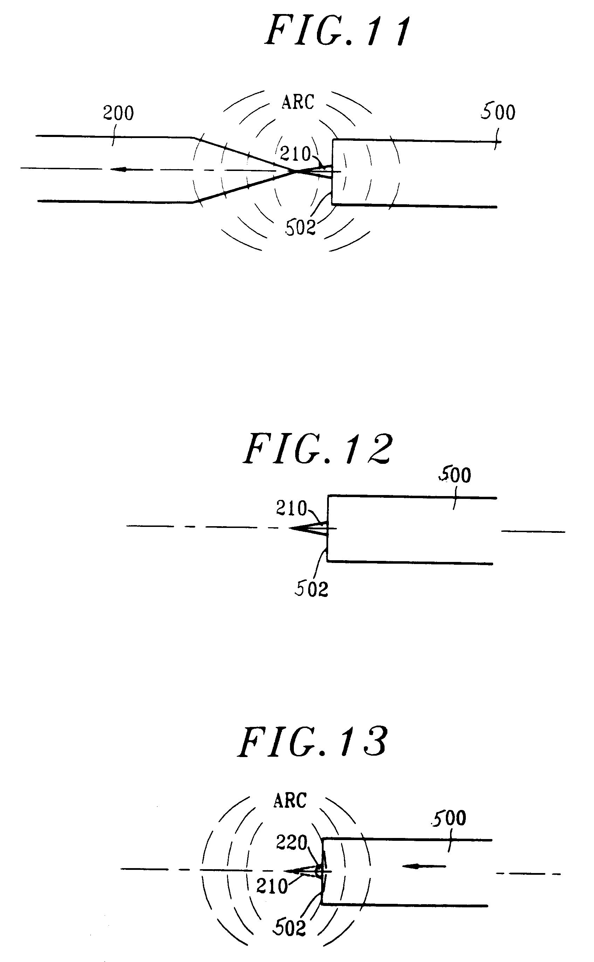

L'ensemble obtenu est soumis à un arc électrique, comme représenté sur la figure 11, pour obtenir une fusion rapide et de faible intensité de la pointe de la fibre étirée 200. Cette fibre 200 est retirée dès l'apparition du soudage de cette pointe sur la fibre clivée 500. Ce retrait de la fibre étirée 200 conduit à libérer une aiguille de verre 210 centrée et liée au coeur de la fibre clivée 500, comme représenté sur la figure 12.

Il reste alors, comme représenté sur la figure 13, à faire fondre l'aiguille de verre 210, à l'aide d'une ou plusieurs passes sous arc de faible intensité, pour transformer l'aiguille 210 en une lentille 220 de courbure désirée.

L'ensemble des étapes précitées peut être mis en oeuvre en quelques minutes. On obtient alors une fibre optique 500 comprenant une extrémité clivée 502 et une lentille 220 rapportée par soudure sur cette extrémité clivée 502.

On notera que l'aspect périodique de la propagation du faisceau à l'intérieur du morceau 400 de fibre optique multimode permet d'accroitre la longueur de ce morceau de fibre 400 de façon à faciliter la réalisation du système.

A la sortie de la microlentille 200, le cône d'ouverture du faisceau, bien que possédant l'angle au sommet préconisé, peut ne pas coïncider avec le cône d'ouverture de la fibre multimode à gradient d'indice 400. Pour ce faire, et obtenir ainsi le meilleur couplage entre le faisceau incident et le morceau de fibre multimode, on intercale entre la lentille 200 et le morceau 400 de fibre optique multimode à gradient d'indice, un morceau 500 de fibre multimode à saut d'indice, de longueur calibrée, comme représenté sur la figure 5. Ce morceau 500 de fibre optique multimode à saut d'indice joue le rôle d'intercalaire en matériau de même indice, entre la microlentille 200 et le morceau 400 de fibre optique multimode à gradient d'indice. Le morceau de fibre optique 500 permet donc d'augmenter le diamètre du faisceau incident jusqu'au diamètre utile de la fibre optique 400 multimode à gradient d'indice. Il procure en outre au système un avantage appréciable en accroissant la distance frontale dw entre le phototransducteur 300 et la microlentille 200.

De préférence, le morceau 400 de fibre multimode à gradient d'indice présente une longueur inférieure à (n+1) pitch/2 avec (n = 0, 1, 2...), tandis que le morceau 500 de fibre multimode à saut d'indice possède une longueur inférieure à pitch/4.

L'utilisation des composés précités conformes à la présente invention, permet d'adapter parfaitement le faisceau divergent issu d'une source 300 à l'entrée de la fibre monomode 100. Le couplage se trouve en effet optimisé par la parfaite adéquation entre les conditions de propagation de la lumière (ouverture de faisceaux) et les modes propres des différentes fibres.

On va maintenant préciser ci-dessous les données spécifiques à un exemple de réalisation d'un système conforme à la présente invention comprenant une microlentille 200, un morceau 500 de fibre optique multimode à saut d'indice et un morceau 400 de fibre multimode à gradient d'indice, intercalés entre le phototransducteur 300 et la fibre optique monomode 100 :
a) pour le barreau 400 de fibre multimode à gradient d'indice :
   diamètre du coeur : 85µm
   diamètre de la gaine : 125µm
   ouverture numérique : 0,275.
b) pour le morceau 500 de fibre optique multimode à saut d'indice :
   indice du coeur : 1,450
   indice de la gaine : sans importance
   diamètre du coeur : 80µm
   diamètre de la gaine : 125µm
   ouverture numérique quelconque.
c) pour la microlentille :
   indice n = 1,450
   diamètre aussi grand que le permet le rayon de courbure ouverture numérique fonction du diamètre et de la distance focale.

Pour une demi-divergence de l'ordre de 35° à l'entrée de la microlentille 200, plusieurs possibilités existent, dont : une distance frontale dw de l'ordre de 40µm, un rayon de courbure de l'ordre de 30µm pour la microlentille, une longueur de l'ordre de 200µm pour le morceau de fibre 400 et de l'ordre de 100µm pour le morceau de fibre 500.

Les améliorations qui découlent de l'utilisation du système qui vient d'être décrit, en particulier l'utilisation d'un faisceau très ouvert et non convergent en sortie de la microlentille, contrairement aux systèmes conventionnels, sont :
1) une réduction des pertes de couplage, surtout dans le cas de faisceaux très divergents,
2) un éloignement important de la fibre ayant pour conséquence :

a) une distance focale plus importante de la lentille d'entrée,
b) une diminution de la rétroaction de la fibre sur le phototransducteur,
c) un accroissement de la distance de sécurité, ou distance frontale dw, du phototransducteur 300,
d) une plus grande facilité d'alignement de celui-ci avec la fibre,
e) une meilleure stabilité du couplage,
f) l'augmentation du (des rayons de courbure) de la microlentille qui favorise l'alignement en réduisant la précision généralement requise.

L'assemblage fibre monomode 100, convertisseur d'ouverture numérique formé par les morceaux de fibre 400 et 500/microlentille 200 est réalisé de préférence par épissurage en choisissant avantageusement des fibres 100, 400 et 500 de même diamètre extérieur, par exemple de 125µm. Un tel épissurage peut être réalisé à l'aide d'une machine conventionnelle à épissurer telle que par exemple le modèle commercialisé sous la référence BFS50 par la Société BEALE INTERNATIONAL TECHNOLOGY.

La coupe des éléments de fibre 100, 400, 500, quant à elle, peut être obtenue avec une cliveuse de précision disponible sur le marché, telle que la cliveuse FUJIKURA CT-07.

L'aspect monolithique du système obtenu après épissurage successif à partir de la fibre monomode 100, jusqu'à la réalisation de la lentille, permet d'obtenir rapidement le couplage optimal avec le phototransducteur 300.

Selon encore un autre perfectionnement de la présente invention, évoqué précédemment, il est prévu dans le cadre de la présente invention de ne pas déposer une lentille 200 simple sur la face clivée du morceau de fibre 500, mais de placer sur ces faces clivées une multilentille, c'est-à-dire une succession de lentilles coaxiales, convexes, de rayons de courbure croissants en rapprochement de la fibre 100.

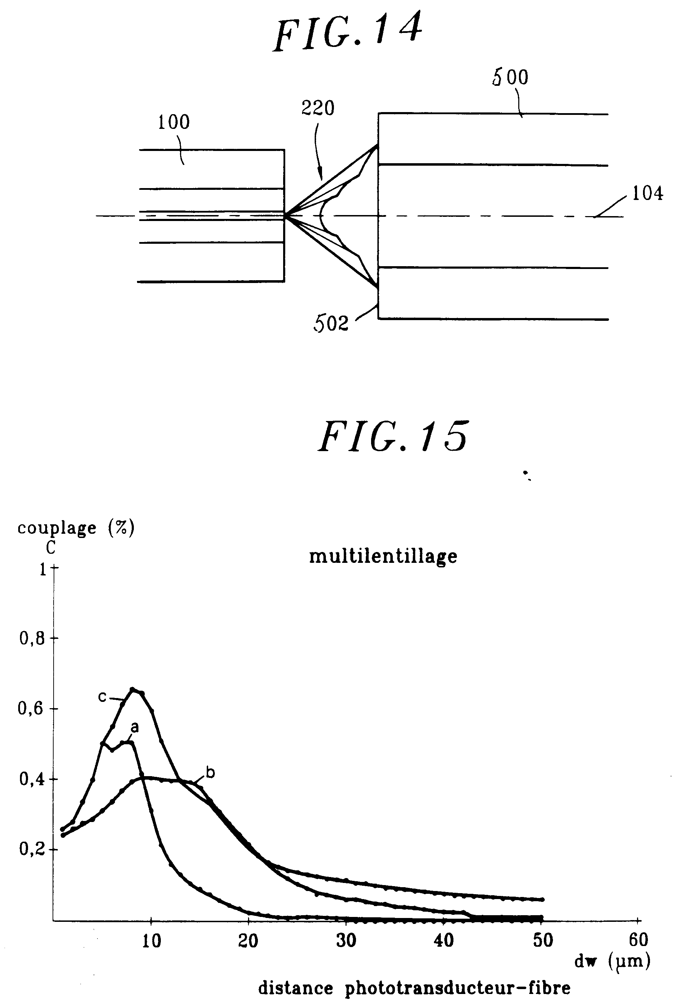

On distingue sur la figure 14 annexée, un tel ensemble de lentilles 200 déposé sur la face clivée 502 d'un morceau de fibre 500 multimode à saut d'indice.

Pour réaliser plusieurs lentilles de diamètre croissant, il convient de réitérer les étapes précitées représentées sur les figures 8 à 13, un nombre de fois égal au nombre de lentilles que l'on souhaite déposer.

En d'autres termes, la pose de la seconde lentille, et éventuellement de toute lentille ultérieure, est opérée grâce à la séquence d'étapes consistant à :
a) étirer un nouveau morceau de fibre optique,
b) aligner la pointe obtenue sur l'axe de la lentille antérieure, avec mise en contact et légère pression,
c) souder en surface la pointe sous l'arc électrique,
d) libérer une aiguille calibrée par traction de la pointe sous l'arc, et
e) lentiller par fusion contrôlée l'aiguille ainsi obtenue.

Il convient de noter qu'au cours de l'étape a) d'étirage d'un nouveau morceau de fibre optique, la conicité de la pointe obtenue par étirage doit être contrôlée pour pouvoir libérer, à l'étape d), une aiguille de taille convenable compatible avec le rayon de courbure désiré pour la nouvelle lentille.

De plus, la puissance de l'arc électrique utilisé au cours des étapes c), d) et e) doit être adaptée à chacune des étapes mentionnées, sous peine de voir disparaître les masses de verre les plus petites.

Pour opérer la fusion requise de la fibre 200, les inventeurs ont utilisé lors d'essais une microsoudeuse du type "micro fusion splicer ms-1.008" commercialisé par la Société FOUNDATION INSTRUMENTS. Une telle microsoudeuse engendre un arc électrique.

L'utilisation d'un chauffage à l'arc électrique n'est cependant pas obligatoire. Il peut être remplacé par un chauffage à l'aide d'une source laser de puissance pourvu que l'on veille à respecter un alignement précis entre la fibre clivée 500 et l'extrémité étirée 200 qui apporte la microlentille 220, et que l'on veille à produire une fusion locale très rapide de la pointe 200 afin de souder sur la fibre clivée 500 une aiguille de verre 210 de dimension appropriée.

On va maintenant démontrer que l'utilisation d'une succession de lentilles coaxiales convexes de rayons de courbure croissants, comme préconisé ci-dessus et représenté sur la figure 14, à la place d'une lentille hémisphérique simple, permet d'améliorer le couplage transducteur/fibre optique.

Les inventeurs ont tout d'abord déterminé que dans un système classique à lentille hémisphérique simple, le rayon de cette lentille conditionne directement la position et la hauteur du maximum de couplage obtenu en fonction de la distance transducteur/fibre, suivant l'axe de celle-ci, pour une ouverture angulaire déterminée du faisceau. Plus précisément, une lentille hémisphérique simple, de rayon de courbure très petit (par exemple inférieur à 8µm) ne peut collecter un maximum de lumière que si la distance transducteur/lentille reste suffisamment petite pour que le cône d'émission coïncide avec l'ouverture numérique de la lentille (comme schématisé sur la figure 3).

Ceci est bien entendu très contraignant puisque le positionnement de la fibre 10 doit alors se faire à une distance dw du phototransducteur 20 équivalente au rayon de courbure de l'ordre de 10µm et avec une précision de centrage transversal du 10ème de µm.

Dans le cadre du système représenté sur la figure 14, la plus petite lentille 220, c'est-à-dire la lentille 220 présentant le rayon de courbure le plus faible, qui correspond également à la lentille la plus éloignée de la face clivée 502 de la fibre optique, collecte la partie centrale du faisceau émis correspondant au maximum d'énergie d'un faisceau gaussien.

La lentille suivante, de rayon de courbure supérieure, s'intéresse jusqu'à sa périphérie à la partie du faisceau non occulté par la précédente, et ainsi de suite dans l'hypothèse d'une succession de lentilles de courbure croissantes en rapprochement de la fibre 500.

La figure 15 annexée représente le coefficient de couplage obtenu entre une fibre optique 100 et un phototransducteur, en fonction de la distance dw séparant sur l'axe 104, ce dernier de la fibre. La figure 15 correspond plus précisément aux données suivantes :
- fibre monomode 8/125,
- rayon du coeur 106 : 4µm,
- divergence du faisceau plus ou moins 45°,
- indice de la gaine 108 : 1,445,
- indice du coeur 106 : 1,450,
- longueur d'onde du rayonnement : 1,3µm
- indice des lentilles : 1,450.

Plus précisément encore, les courbes 15a et 15b représentent les valeurs du coefficient du couplage C respectivement obtenu avec des lentilles hémisphériques simples 220 déposées en regard du coeur 106 et présentant, l'une un rayon de courbure de 4µm, l'autre un rayon de courbure de 8µm. En outre, la courbe identifiée par l'indice C sur la figure 15 correspond au coefficient de couplage obtenu à l'aide d'une lentille double conforme à la figure 14 comprenant deux lentilles de rayons de courbure respectifs de 4µm et 8µm.

La comparaison de la courbe 15c avec les courbes 15a et 15b précédemment évoquées montre que le coefficient de couplage C obtenu grâce à une lentille double est majoré de 35% par rapport à la meilleure des lentilles simples, tandis qu'un accroissement de la distance laser fibre dw introduit moins de perte de couplage.

Les rayons de courbure des lentilles 220 déposées successivement, comme représentés sur la figure 14, sur la face clivée 502 du morceau de fibre optique 500 multimode à saut d'indice s'échelonnent de préférence entre 10µm et 100µm.

Au cours des étapes d'alignement des différents composants du système optique conformes à la présente invention, notamment au cours de l'alignement des fibres 100, 400, 500, ainsi que de l'alignement des lentilles 220 sur la face clivée du morceau de fibre associé, un signal optique peut être injecté à l'extrémité non utilisée de la fibre 100. Le signal optique est alors véhiculé par le coeur de la fibre 100, et le passage du signal optique dans l'élément placé en regard et en cours d'alignement permet de vérifier le positionnement correct des composants.

Un telle étape de contrôle optique d'alignement peut compléter efficacement l'alignement mécanique.

Bien entendu la présente invention n'est pas limitée aux modes de réalisation particuliers qui viennent d'être décrits mais s'étend à toute variante conforme à son esprit.

Selon une application particulière mais non limitative, les inventeurs ont réalisé un laser duplexeur (émetteur/récepteur) réversible.

## Revendications

1. Système optique comprenant une fibre optique principale monomode (100) couplée à un phototransducteur (300), caractérisé par le fait qu'il comprend entre la fibre optique monomode (100) et le phototransducteur (300), un ensemble composé successivement d'un morceau de fibre multimode à gradient d'indice (400), d'un morceau de fibre multimode à saut d'indice (500) et d'une microlentille (200).

2. Système selon la revendications 1, caractérisé par le fait que la microlentille (200) est constituée d'une lentille multiple (220) à rayon de courbure croissant en éloignement du phototransducteur (300).

3. Système selon l'une des revendications 1 ou 2, caractérisé par le fait que les différents éléments (200, 500, 400) intercalés entre le phototransducteur (300) et la fibre monomode (100) sont fixés sur une face d'extrémité clivée (102) de celle-ci par épissurage.

4. Système selon l'une des revendications 1 à 3, caractérisé par le fait que le morceau (400) de fibre multimode à gradient d'indice est conçu pour adapter le faisceau au mode propre de la fibre optique monomode (100).

5. Système selon l'une des revendications 1 à 4, caractérisé par le fait que le morceau (500) de fibre multimode à saut d'indice est conçu pour adapter le diamètre du faisceau optique au diamètre utile du morceau de fibre multimode (400) à gradient d'indice.

6. Système selon l'une des revendications 1 à 5, caractérisé par le fait que la microlentille (200) est obtenue grâce à la séquence d'étapes consistant à :
a) étirer un morceau de fibre optique (200),
b) aligner la pointe obtenue sur l'axe d'une surface clivée (402) d'une fibre (400) placée en regard, avec mise en contact et légère pression,
c) souder en surface la pointe mise en contact,
d) libérer une aiguille calibrée (210) par traction de la pointe, et
e) lentiller par fusion contrôlée l'aiguille ainsi obtenue.

7. Système selon la revendication 6, caractérisé par le fait que pour la réalisation d'une lentille multiple (220), les étapes précitées sont réitérées.

8. Système selon l'une des revendications 1 à 7 prises en combinaison avec la revendication 2, caractérisé par le fait qu'il est prévu au moins deux lentilles (220) de diamètre différent.

9. Système selon l'une des revendications 1 à 8, caractérisé par le fait qu'il est prévu un nombre de lentilles (220) supérieur à deux.

10. Système selon l'une des revendications 1 à 9, caractérisé par le fait que le rayon des lentilles (220) déposé est compris entre 10 et 100µm.

11. Système selon l'une des revendications 1 à 10, caractérisé par le fait que la longueur du morceau (400) des fibres optiques multimode à gradient d'indice est de l'ordre de [(1/4) + (n/2)] pitch avec (n = 0, 1, 2...).

12. Système selon l'une des revendications 1 à 11, caractérisé par le fait que le morceau (400) de fibre multimode à gradient d'indice présente une longueur inférieure à (n+1) pitch/2 avec (n = 0, 1, 2...), tandis que le morceau (500) de fibre multimode à saut d'indice possède une longueur inférieure à pitch/4.
